(19) Europäisches Patentamt

European Patent Office

Office européen des brevets

(11) **EP 1 182 718 B1**

(12) **EUROPÄISCHE PATENTSCHRIFT**

(45) Veröffentlichungstag und Bekanntmachung des Hinweises auf die Patenterteilung:
**10.09.2003  Patentblatt 2003/37**

(51) Int Cl.7: **H01M 4/52**, H01M 10/34

(21) Anmeldenummer: **01116524.8**

(22) Anmeldetag: **07.07.2001**

(54) **Ni/Metallhydrid-Sekundärelement**

Nickel-Metal hydride secondary battery

Accumulateur au nickel hydrure metallique

(84) Benannte Vertragsstaaten:
**AT BE CH CY DE DK ES FI FR GB GR IE IT LI LU MC NL PT SE TR**

(30) Priorität: **16.08.2000  DE 10039833**

(43) Veröffentlichungstag der Anmeldung:
**27.02.2002  Patentblatt 2002/09**

(73) Patentinhaber: **VARTA Automotive GmbH**
**30419 Hannover (DE)**

(72) Erfinder: **Bäuerlein, Peter, Dr.**
**29690 Lindwedel (DE)**

(74) Vertreter: **Lins, Edgar, Dipl.-Phys. Dr.jur. et al Gramm, Lins & Partner GbR,**
**Theodor-Heuss-Strasse 1**
**38122 Braunschweig (DE)**

(56) Entgegenhaltungen:
**EP-A- 0 727 835          US-A- 3 342 640**

- **PATENT ABSTRACTS OF JAPAN vol. 1997, no. 12, 25. Dezember 1997 (1997-12-25) & JP 09 204930 A (TOYOTA AUTOM LOOM WORKS LTD), 5. August 1997 (1997-08-05)**

EP 1 182 718 B1

**Beschreibung**

Die Erfindung betrifft ein Ni/Metallhydrid-Sekundärelement mit einer positiven Nickelhydrooxidelektrode, einer negativen Elektrode, die eine Wasserstoff-Speicherlegierung enthält, und einem alkalischen Elektrolyten.

Nickelhydroxid ($Ni(OH)_2$) stellt das elektrochemisch aktive Material der positiven Elektrode von Nickel-Cadmium und Nickel-Metallhydrid-Batterien dar.

Da zweiwertiges Nickelhydroxid keine elektronische Leitfähigkeit besitzt, werden im allgemeinen Leitmittel in Pulverform zugesetzt. Beim Verdichten der Massemischung bildet sich so ein dreidimensionales Leitgerüst, welches die Nickelhydroxidpartikel elektronisch anbindet. Bei Masseelektroden, wie sie in Knopfzellen Verwendung finden, mischt man dem Nickelhydroxid feines Nickelpulver zu, um eine leitfähige Masse zu erhalten. In Ni/Cd-Zellen fand früher Graphit als Leitmittel Verwendung, allerdings war dieser anfällig für oxidative Zerstörung. Bei Elektroden mit Metallfoamgerüst dient der Nickelschaum als Leitgerüst, in dessen Poren man eine wässrige Suspension, welche Nickelhydroxid enthält, füllt. Zur Ausbildung eines feinen, die Partikel netzartig umspannenden Leitgerüstes setzt man der positiven Masse Kobaltverbindungen in Form von CoO, $Co(OH)_2$ oder metallischem Kobalt zu. Diese Verbindungen sind im Elektrolyten löslich und werden während der ersten Ladung der Zelle in elektronisch leitfähiges CoOOH überführt, welches die $Ni(OH)_2$-Partikel in der gewünschten Weise anbindet.

Für die Ladbarkeit der positiven Elektrode sind die Potentiallagen der Oxidation des $Ni(OH)_2$ zu NiOOH (Ladereaktion) und der Sauerstoffentwicklung wichtig:

$$Ni(OH)_2 + OH^- \rightarrow NiOOH + H_2O + e^- \tag{1}$$

$$4 OH^- \rightarrow O_2 + 2 H_2O + 4e^- \tag{2}$$

Für jeden der oben aufgeführten Redoxprozesse (1) und (2) ist eine gewisse Überspannung notwendig, diese ändert sich wie die Lage der jeweiligen Redoxpotenziale mit der Temperatur. Insbesondere bei erhöhten Ladetemperaturen und niedrigen Ladeströmen kommt es dann zu einer unzureichenden Ladungsaufnahme, da ein erheblicher Teil der zugeführten Ladungsmenge zur Oxidation der Hydroxidionen verbraucht wird. Die positive Elektrode kann nicht mehr vollgeladen werden, da die hierfür nötige Ladespannung wegen der vorher einsetzenden Sauerstoffentwicklung nicht erreicht werden kann. Mit der abnehmenden Ladung der positiven Elektrode sinkt auch die Kapazität der gesamten Zelle.

Aus Dokument EP 0 867 959 A2 ist bekannt, dass Zusätze von Verbindungen der Elemente Yttrium, Ytterbium, Erbium, Indium, Antimon, Barium, Calcium und Beryllium zu einer Verbesserung der Ladungsaufnahme bei höheren Ladetemperaturen führen.

Aus Dokument EP 0 923 146 A1 ist bekannt, dass Zusätze von Oxiden der Elemente Yttrium, Ytterbium, Calcium, Titan, Niob und Chrom zu einer Erhöhung der Überspannung der Sauerstoffentwicklung und somit zu einer Verbesserung der Ladungsaufnahme bei höheren Ladetemperaturen führen.

Aus Dokument EP 0 587 973 B1 ist bekannt, dass Zusätze von Oxiden bzw. Hydroxiden der Elemente Yttrium, Indium, Antimon, Barium, Calcium und Beryllium zu einer Verbesserung der Ladungsaufnahme bei höheren Ladetemperaturen führen.

Aus Dokument EP 0 834 945 A1 ist bekannt, dass Zusätze von Oxiden bzw. Hydroxiden von Elementen aus der Gruppe der Lanthanoiden zu einer Verbesserung der Ladungsaufnahme bei höheren Ladetemperaturen führen.

Aus JP 09 204930 A ist eine wiederaufladbare Nickelwasserstoffbatterie bekannt, bei der dem Elektrolyten oder der negativen Elektrode Aluminiumhydroxid oder ein Aluminiumsalz hinzugefügt ist, um eine Korrosion der negativen Elektrode zu verringern. Die als Wasserstoffspeicherlegierung dienende $AB_5$-Legierung der negativen Elektrode wird durch den basischen Elektrolyten angegriffen. Es bilden sich Deckschichten aus Hydroxiden der Lanthanoiden, des Nickels, des Kobalts und von Aluminium aus. Durch die Zugabe des Aluminiums zu dem Elektrolyten bildet sich eine Sättigung des Elektrolyten mit $[Al(OH)_6]^{3-}$-Komplexen aus, wodurch eine weitere Auflösung von Aluminium aus der Legierung verhindert, eine weitere Korrosion der negativen Elektrode somit unterbunden wird. Problematisch ist dabei, dass eine höhere Konzentration von Aluminium in dem Elektrolyten die positive Elektrode irreversibel schädigen kann.

Der Erfindung liegt die Aufgabe zugrunde, eine positive Elektrode anzugeben, die eine hohe Ladungsaufnahme bei erhöhten Temperaturen aufweist und die eine hohe Kapazität auch bei höheren Ladetemperaturen besitzt.

Diese Aufgabe wird bei einem Akkumulator der eingangs genannten Art durch die kennzeichnenden Merkmale des Anspruchs 1 gelöst. In den Unteransprüchen sind vorteilhafte Ausgestaltungen der Erfindung angegeben.

Durch den erfindungsgemäßen Zusatz einer im Elektrolyten löslichen Aluminiumverbindung, insbesondere Aluminiumhydroxid und/oder Aluminiumoxid, in Pulverform zur Masse der positiven Elektrode, wird die Ladungsaufnahme von Nickel-Metallhydrid-Sekundärelementen bei erhöhter Temperatur verbessert. Diese Zusätze können sich durch Lösungs-/Abscheidungsvorgänge in feinverteilter Form auf der positiven Elektrode bzw. auf der Oberfläche der Nickelhydroxidkörner niederschlagen. Dies könnte zu einer Modifizierung der Oberfläche und somit zu einer höheren Überspannung für die $O_2$-Entwicklung führen und dadurch die Ladungsaufnahme bei erhöhter Ladetemperatur verbessern.

Aus verschiedenen Druckschriften sind mit Aluminium dotierte Nickelhydroxide bekannt.

In Journal Chem. Soc. Commun. 1985, Seiten 81 - 82 wird beispielsweise ein mit Aluminium dotiertes Nickelhydroxid, der allgemeinen Formel $Ni_{1-x}Al_x(OH)_2X_x$ mit $X = NO_3^-$ und $x = 0.2$ beschrieben. Die für dieses Material erforderlichen Synthesebedingungen werden ebenfalls angegeben. Das so hergestellte Material zeigt in elektrochemischen Lade/Entladeversuchen eine höhere Kapazität und eine höhere Entladespannung auf als reines $Ni(OH)_2$. Al ist in diesem Fall ein essentieller Bestandteil des Nickelhydroxids, es muss daher durch eine speziellen Synthese in den $Ni(OH)_2$-Kristall eingebaut werden. Die im Kristall eingebauten Mengen an Aluminium sind mit 20 mol% relativ hoch, dies muss auch so sein, um eine Erhöhung der Entladespannung zu erreichen.

Aus dem Dokument DE-AS 1 226 671 ist ein Verfahren zur Herstellung von $Ni_{1-x}Al_x(OH)_2X_x$ mit verbesserten elektrochemischen Eigenschaften durch Fällung eines Gemisches von $Ni(NO_3)_2$ und $Al(NO_3)_3$ bekannt. Auch hier ist das Aluminium Bestandteil des Nickelhydroxids, da es im Kristall eingelagert ist, es ersetzt im Kristall Gitterplätze des Nickels. Bei dem nach diesem Verfahren hergestellten Material handelt es sich nicht um ein Gemisch von Nickelhydroxid und Aluminiumhydroxid, sondern es liegt ein echter Mischkristall, also ein Nickelaluminat vor.

Im Falle solcher aluminiumdotierter Nickelhydroxide liegt das in die Zelle eingebrachte Aluminium im Wirtsgitter des Nickelhydroxids vor, es ersetzt Gitterplätze des Nickels. Dadurch verändert es die. strukturellen, die chemischen und die elektrochemischen Eigenschaften des Nickelhydroxids, was beim erfindungsgemäßen Zusatz einer Aluminiumverbindung zur positiven Masse nicht der Fall ist. Des weiteren kann das Aluminium im Falle des Einsatzes aluminiumdotierter Nickelhydroxide nicht oder nur äußerst schwer durch den Elektrolyten aus dem Nickelaluminiumhydroxid-Mischkristall herausgelöst werden, wohingegen das erfindungsgemäß eingebrachte Aluminium im Elektrolyten gelöst werden kann. Die Löslichkeit im Elektrolyten ist die Voraussetzung dafür, dass sich das Aluminium in Form seines Hydroxids durch Auflösungs/Abscheidungsvorgänge in der erforderlichen Weise verteilt, dass sich eine Modifizierung der Oberfläche der positiven Elektrode und/oder des Nickelhydroxidpartikels ergibt, indem sich ein dünner, poröser und/oder ionenleitender Film von $Al(OH)_3$ auf der positiven Elektrode und/oder dem Nickelhydroxidkorn niederschlägt. Die Auflösungs/Abscheidungsdynamik des Aluminiumhydroxids wird von pH-Änderungen während des Ladens und Entladens angetrieben. Eine Belegung der Oberfläche der positiven Elektrode und/oder des Nickelhydroxidpartikels durch einen dünnen, porösen und/oder ionenleitenden Film aus $Al(OH)_3$ könnte eine Erhöhung der Überspannung für die $O_2$-Entwicklung zur Folge haben. Gleichzeitig muss dafür Sorge getragen werden, dass der sich auf der Oberfläche der positiven Elektrode und/oder des Nickelhydroxidpartikels abscheidende Film aus $Al(OH)_3$ nicht zu dick und damit für Ladungsträger undurchlässig wird, da sonst die Lade- und Entladereaktion be- oder sogar verhindert werden. Dies lässt sich durch den erfindungsgemäßen Einsatz von Aluminiumhydroxid erreichen, nicht aber durch Verwendung aluminiumdotierter Nickelhydroxide.

In Journal Electrochem. Soc. 145, 1998, Seiten 456 bis 458 wird der schädliche Einfluss von Aluminium, welches durch Korrosion der Wasserstoffspeicherlegierung in den Elektrolyten und von dort auf die positive Elektrode gelangt beschrieben. Es wird dort angegeben, dass die positive Elektrode durch diese Al-Vergiftung irreversibel geschädigt wird, was sich in einer verminderten Kapazität bemerkbar macht. Demnach sollten Al-Verbindungen soweit irgend möglich von der positiven Elektrode fern gehalten werden.

Durch das erfindungsgemäße Vorgehen erreicht man jedoch durch den Zusatz von Al-Verbindungen in Pulverform zur positiven Masse eine deutliche Verbesserung der elektrochemischen Eigenschaften der positiven Elektrode.

Die Aluminiumverbindung ist insbesondere Aluminiumhydroxid und/oder Aluminiumoxid. Die Masse der in der positiven Massemischung vorhandenen Aluminiumverbindungen beträgt 0.1 bis 2 Gew.%, vorzugsweise 0,5 bis 1,0 Gew.%, bezogen auf die Masse des vorhandenen Nickelhydroxids.

Die positive Elektrode kann in Kombination mit Aluminiumhydroxid oder Aluminiumoxid weitere oxidische Verbindungen aus der Gruppe der Lanthanoiden, $Y_2O_3$, $La_2O_3$ und $Ca(OH)_2$ sowie Gemische dieser Verbindungen enthalten, wobei der Gehalt an zusätzlich zu Aluminiumhydroxid oder Aluminiumoxid beigemengten oxidischen Verbindungen 9.0 Gew.%, bezogen auf die Masse des Nickelhydroxids, nicht überschreitet.

Die Eignung der erfindungsgemäßen positiven Masse wird, um die Versuchsbedingungen zu vereinfachen, am Beispiel von Knopfzellen untersucht. Als negative Elektrode findet eine Presselektrode bestehend aus $AB_5$-Speicherlegierung der Zusammensetzung $LmNi_{3.6}Co_{0.7}Mn_{0.3}Al_{0.4}$, PTFE und Ruß Verwendung. Die positive Presselektrode besteht aus sphärischem $Ni(OH)_2$, 10% CoO, 30% Ni und gegebenenfalls weiteren Zusätzen. Bei jedem Versuch werden sogenannte Standardzellen, d.h. Zellen ohne Zusatz mitgetestet.

Zur Bestimmung der Ladungsaufnahme kommt folgende Testprozedur zum Einsatz:

3 Zyklen bei 21 °C: Laden mit C/10 bis 150% der Nennkapazität; Entladen mit C/5 bis 0.97 V,
3 Zyklen bei 45 °C: Laden mit C/10 bis 150% der Nennkapazität; Entladen mit C/5 bis 0.97 V,
3 Zyklen bei 21 °C: Laden mit C/10 bis 150% der Nennkapazität; Entladen mit C/5 bis 0.97 V,
3 Zyklen bei 60 °C: Laden mit C/10 bis 150% der Nennkapazität; Entladen mit C/5 bis 0.97 V.

Die Entladung wird mit höherem Strom durchgeführt, um eine möglichst geringe Selbstentladung, insbesondere bei 60 °C zu erhalten. Die Ladungsaufnahme wird jeweils im 3. Zyklus bei der gegebenen Temperatur bestimmt.

Um eine objektive Betrachtung zu ermöglichen werden neben dem erfindungsgemäßen Beispiel 1 mehrere Vergleichsbeispiele untersucht, dabei hat es sich als sinnvoll erwiesen die in die positive Elektrode eingebrachte Menge an Aluminiumverbindung auf die vorhandene Menge an Nickelhydroxid zu beziehen. Dies erleichtert den Transfer der in Knopfzellen gewonnenen Erkenntnisse auf andere Zelltypen, z.B. AA-Zellen.

Beispiel 1: (B1)

Die positive Massemischung enthält 59.7% sphärisches Nickelhydroxid, 0.3% Aluminiumhydroxid, 10.0% Kobaltoxid und 30.0% Nickelpulver. Die zugesetzte Menge an Aluminiumhydroxid beträgt somit 0.5 Gew.% der Menge des in der positiven Mischung vorhandenen Nickelhydroxids.

Vergleichsbeispiel 1: (V1)

Die positive Massemischung enthält 60.0% sphärisches Nickelhydroxid, 10.0% Kobaltoxid und 30.0% Nikkelpulver.

Vergleichsbeispiel 2: (V2)

Die positive Massemischung enthält 59.0% sphärisches Nickelhydroxid, 1.0% Aluminiumhydroxid, 10.0% Kobaltoxid und 30.0% Nickelpulver. Die zugesetzte Menge an Aluminiumhydroxid beträgt somit 1.7 Gew.% der Menge des in der positiven Mischung vorhandenen Nickelhydroxids.

Vergleichsbeispiel 3: (V3)

Die positive Massemischung enthält 57.0% sphärisches Nickelhydroxid, 3.0% Aluminiumhydroxid, 10.0% Kobaltoxid und 30.0% Nickelpulver. Die zugesetzte Menge an Aluminiumhydroxid beträgt somit 5.3 Gew.% der Menge des in der positiven Mischung vorhandenen Nickelhydroxids.

Vergleichsbeispiel 4: (V4)

Die positive Massemischung enthält 55.0% sphärisches Nickelhydroxid, 5.0% Aluminiumhydroxid, 10.0% Kobaltoxid und 30.0% Nickelpulver. Die zugesetzte Menge an Aluminiumhydroxid beträgt somit 9.1 Gew.% der Menge des in der positiven Mischung vorhandenen Nickelhydroxids.

Vergleichsbeispiel 5: (V5)

Die positive Massemischung enthält 59.7% sphärisches Nickelhydroxid, 0.3% Kalziumhydroxid, 10.0% Kobaltoxid und 30.0% Nickelpulver. Die zugesetzte Menge an Kalziumhydroxid beträgt somit 0.5 Gew.% der Menge des in der positiven Mischung vorhandenen Nickelhydroxids.

Vergleichsbeispiel 6: (V6)

Die positive Massemischung enthält 59.7% sphärisches Nickelhydroxid, 0.3% Ytterbiumoxid, 10.0% Kobaltoxid und 30.0% Nickelpulver. Die zugesetzte Menge an Ytterbiumoxid beträgt somit 0.5 Gew.% der Menge des in der positiven Mischung vorhandenen Nickelhydroxids.

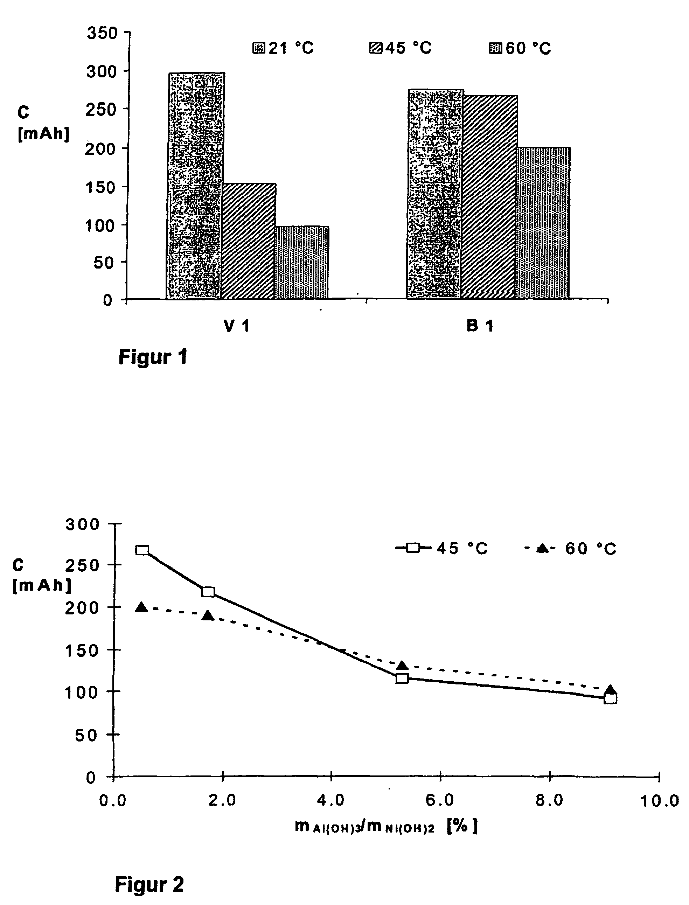

Der erfindungsgemäße Zusatz von Aluminiumhydroxid zur positiven Masse verbessert die Ladungsaufnahme bei erhöhter Temperatur, siehe Tabelle 1 und Figur 1. Figur 1 zeigt dabei den Einfluss eines Zusatzes von Aluminiumhydroxid zur positiven Masse gemäß Beispiel 1 (B1), im Vergleich zu Zellen ohne Aluminiumhydroxid gemäß Vergleichsbeispiel 1 (V1) auf die Zellkapazität C.

Durch den erfindungsgemäßen Zusatz vermindert man die Zellkapazität gemessen bei 21°C geringfügig. Bei höheren Ladetemperaturen von 45 °C bzw. 60 °C weisen Zellen mit der erfindungsgemäßen positiven Masse entsprechend Beispiel 1 eine um 74% höhere Kapazität als Vergleichszellen ohne Aluminiumhydroxid, gemäß Vergleichsbeispiel 1. Diese Daten sind Tabelle 1 und Figur 1 zu entnehmen.

Tabelle 1:

| Einfluss eines Al(OH)$_3$-Zusatzes auf die Zellkapazität bei verschiedenen Ladetemperaturen | | | | |
|---|---|---|---|---|
| | $m_{Al(OH)3}/m_{Ni(OH)2}$ | Zellkapazität [mAh] | | |
| Beispiel | [%] | 21 °C | 45 °C | 60 °C |
| Vergleich 1 (V1) | 0.0 | 296.0 | 153.2 | 96.9 |
| Beispiel 1 (B1) | 0.5 | 274.5 | 265.8 | 200.0 |

Eine weitere Erhöhung des Aluminiumhydroxidgehalts in der positiven Masse führt dann jedoch zu Einbußen in der Zellkapazität, wie Tabelle 2 und Figur 2 zeigen. Figur 2 zeigt den Einfluss des Al(OH)$_3$-Gehaltes auf die Zellkapazität C bei unterschiedlichen Ladetemperaturen.

Tabelle 2:

| Einfluss des Al(OH)$_3$-Gehaltes auf die Zellkapazität bei verschiedenen Ladetemperaturen | | | | |
|---|---|---|---|---|
| | $m_{Al(OH)3}/m_{Ni(OH)2}$ | Zellkapazität [mAh] | | |
| Beispiel | [%] | 21 °C | 45 °C | 60 °C |
| Beispiel 1 (B1) | 0.5 | 274.5 | 265.8 | 200.0 |
| Vergleich 2 (V2) | 1.7 | 213.4 | 216.9 | 190.4 |
| Vergleich 3 (V3) | 5.3 | 91.7 | 114.9 | 130.5 |
| Vergleich 4 (V4) | 9.1 | 77.8 | 92.7 | 103.2 |

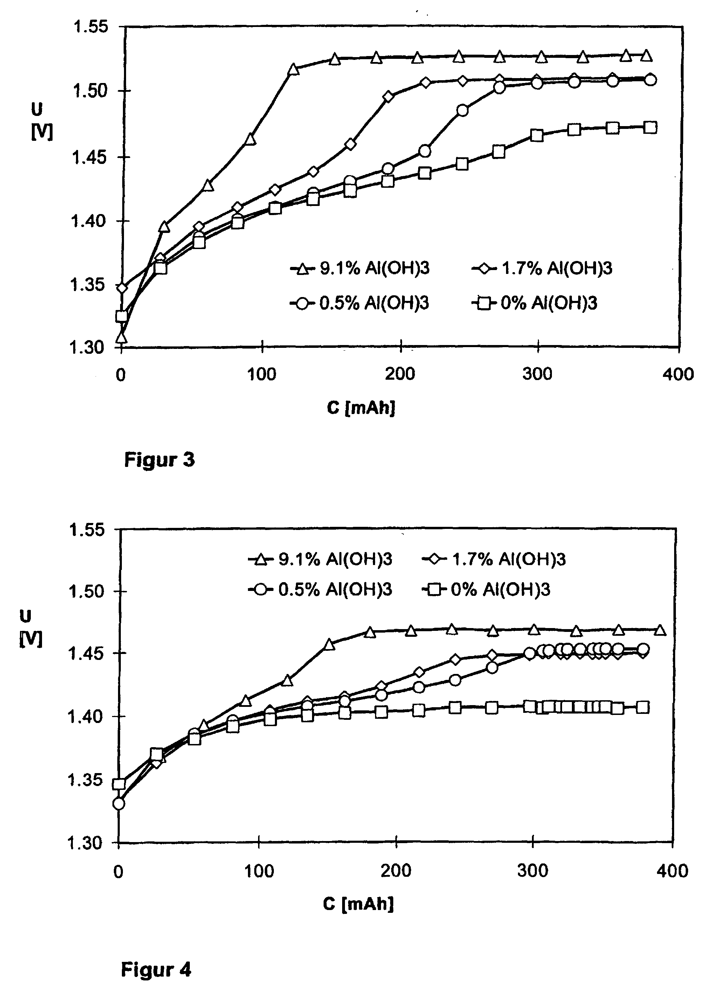

Al(OH)$_3$-Gehalte oberhalb 1% vermindern die Zellkapazität, wobei der schädigende Effekt des Aluminiumhydroxids dessen positive Wirkung überwiegt. Diese liegt wahrscheinlich in der Erhöhung der O$_2$-Überspannung durch eine Modifizierung der Oberfläche der Nickelhydroxidpartikel. Ein zu hoher Anteil an Aluminiumhydroxid könnte die Oberfläche der Nickelhydroxidpartikel abschirmen und so den Ablauf der elektrochemischen Lade- und Entladereaktion behindern. Dies ist aus den Figuren 3 und 4 und der Tabelle 3 ersichtlich. Figur 3 zeigt Ladespannungskurven (U) von Zellen mit unterschiedlichem Al(OH)$_3$-Gehalt bei einer Ladetemperatur von 21 °C, 150% NC Ladung mit C/10. Figur 4 zeigt Ladespannungskurven (U) von Zellen mit unterschiedlichem Al(OH)$_3$-Gehalt bei einer Ladetemperatur von 45 °C,150% NC Ladung mit C/10.

Die Zelle mit einem erfindungsgemäßen Al(OH)$_3$-Zusatz von 0.5% bezogen auf die Masse an Nickelhydroxid gemäß Beispiel 1 weist eine höhere Ladeschlussspannung auf als Zellen ohne Aluminiumhydroxidzusatz gemäß Vergleichsbeispiel 1. Das Ni$^{2+}$/Ni$^{3+}$-Potential ist deutlich zum Potential der O$_2$-Entwicklung abgegrenzt, (Tabelle 3 und Figur 3). Mit zunehmendem Aluminiumhydroxidgehalt nimmt zwar die Ladeschlussspannung zu, jedoch nimmt die von der Elektrode vor dem Erreichen der Ladeschlussspannung aufgenommene Ladungsmenge mit zunehmendem Aluminiumhydroxidgehalt ab.

Tabelle 3:

| Einfluss des Al(OH)$_3$-Gehaltes auf die Ladeschlussspannung bei verschiedenen Ladetemperaturen | | | |
|---|---|---|---|
| $m_{Al(OH)3}/m_{Ni(OH)2}$ | Ladeschlussspannung [V] | | |
| [%] | 21 °C | 45 °C | 60 °C |
| 0.0 | 1.468 | 1.404 | 1.364 |
| 0.5 | 1.508 | 1.453 | 1.416 |
| 1.7 | 1.509 | 1.450 | 1.412 |
| 5.3 | 1.517 | 1.461 | 1.425 |
| 9.1 | 1.527 | 1.468 | 1.399 |

Mit zunehmender Temperatur und abnehmendem Aluminiumhydroxidanteil nimmt die Ladeschlussspannung ab. Ein Optimum an Zellkapazität gekennzeichnet durch die aufgenommene Ladungsmenge vor Erreichen der Ladeschlussspannung ergibt sich bei einem Aluminiumhydroxidgehalt von ca. 0.5% bezogen auf die Masse an Nickelhydroxid gemäß Beispiel 1.

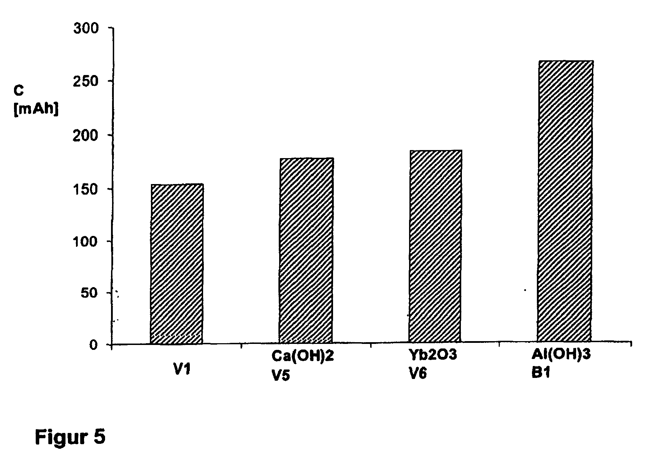

Um die Wirkung des erfindungsgemäßen Zusatzes an Aluminiumhydroxid zu zeigen, wurden Vergleichszellen mit aus den eingangs genannten Dokumenten empfohlenen Zusätzen an Kalziumhydroxid und Ytterbiumoxid hergestellt. Die Ergebnisse sind in Tabelle 4 und Figur 5 zusammengefasst. Figur 5 zeigt den Einfluss geringer Mengen unterschiedlicher Zusätze auf die Zellkapazität C bei der Ladetemperatur von 45 °C.

Tabelle 4:

| Einfluss unterschiedlicher Zusätze auf die Zellkapazität bei unterschiedlichen Ladetemperaturen, 150% NC Ladung mit C/10 | | | | | |
|---|---|---|---|---|---|
| | | | Zellkapazität [mAh] | | |
| **Beispiele** | **Additiv** | **[%]** | **21 °C** | **45 °C** | **60 °C** |
| Vergleich 1 (V1) | kein | 0.0 | 296.0 | 153.2 | 95.9 |
| Vergleich 5 (V5) | $Ca(OH)_2$ | 0.5 | 298.4 | 176.0 | 101.4 |
| Vergleich 6 (V6) | $Yb_2O_3$ | 0.5 | 296.7 | 183.5 | 95.4 |
| Beispiel 1 (B1) | $Al(OH)_3$ | 0.5 | 274.5 | 265.8 | 200.0 |

Verglichen mit den bekannten Zusätzen $Ca(OH)_2$ bzw. $Yb_2O_3$ zeigt der erfindungsgemäße Zusatz von Al$(OH)_3$ den höchsten Effekt bei einer insgesamt geringen Menge an Zusatz. Ist die Kapazität der Zellen bei einer Ladetemperatur von 21°C zunächst um ca. 7% geringer. So weisen die erfindungsgemäßen Zellen bei einer Ladetemperatur von 45 °C eine um 45% bis 74% höhere Kapazität auf.

## Patentansprüche

1. Nickel-Metallhydrid-Sekundärelement mit einer positiven Nickelhydroxidelektrode, einer negativen Elektrode, die eine Wasserstoffspeicherlegierung enthält, und einem alkalischen Elektrolyten, **dadurch gekennzeichnet, dass** die mit einem dreidimensionalen metallischen Leitgerüst versehene positive Elektrode neben Nickelhydroxid und Kobaltoxid zusätzlich eine im Elektrolyten lösliche-Aluminiumverbindung enthält, mittels derer durch Lösungs- und Abscheidungsvorgänge die Oberfläche der positiven Nickelhydroxidelektrode modifiziert ist.

2. Ni/Metallhydrid-Sekundärelement nach Anspruch 1, **dadurch gekennzeichnet, dass** die Aluminiumverbindung Aluminiumhydroxid und/oder Aluminiumoxid ist.

3. Ni/Metallhydrid-Sekundärelement nach Anspruch 1 oder 2, **dadurch gekennzeichnet, dass** die Masse der in der positiven Massemischung vorhandenen Aluminiumverbindung 0.1 bis 2 Gew%, bezogen auf die Masse des vorhandenen Nickelhydroxids, beträgt.

4. Ni/Metallhydrid-Sekundärelement nach Anspruch 3, **dadurch gekennzeichnet, dass** der Gehalt an Aluminiumhydroxid oder Aluminiumoxid zwischen 0.5 und 1.0 Gew%, bezogen auf die Masse des Nickelhydroxids, liegt.

5. Ni/Metallhydrid-Sekundärelement nach einem der Ansprüche 1 bis 4, **dadurch gekennzeichnet, dass** die positive Elektrode in Kombination mit Aluminiumhydroxid oder Aluminiumoxid weitere oxidische Verbindungen aus der Gruppe der Lanthanoiden, $Y_2O_3$, $La_2O_3$ und $Ca(OH)_2$ sowie Gemische dieser Verbindungen enthält.

6. Ni/Metallhydrid-Sekundärelement nach Anspruch 5, **dadurch gekennzeichnet, dass** der Gehalt an zusätzlich zu Aluminiumhydroxid oder Aluminiumoxid beigemengten oxidischen Verbindungen 9.0 Gew%, bezogen auf die Masse des Nickelhydroxids, nicht überschreitet.

## Claims

1. Nickel-metal hydride secondary element having a positive nickel hydroxide electrode, a negative electrode which

## EP 1 182 718 B1

contains a hydrogen storage alloy, and an alkaline electrolyte, **characterized in that** the positive electrode, which is provided with a three-dimensional metallic conductive structure, also contains an aluminium compound which is soluble in the electrolyte, in addition to nickel hydroxide and cobalt oxide, and by which the surface of the positive nickel hydroxide electrode is modified by means of dissolving and deposition processes.

2. Ni/metal hydride secondary element according to Claim 1, **characterized in that** the aluminium compound is aluminium hydroxide and/or aluminium oxide.

3. Ni/metal hydride secondary element according to Claim 1 or 2, **characterized in that** the mass of the aluminium compound which is present in the positive bulk material mixture is 0.1 to 2% by weight relative to the mass of the nickel hydroxide which is present.

4. Ni/metal hydride secondary element according to Claim 3, **characterized in that** the content of aluminium hydroxide or aluminium oxide is between 0.5 and 1.0% by weight relative to the mass of the nickel hydroxide.

5. Ni/metal hydride secondary element according to one of Claims 1 to 4, **characterized in that**, in combination with aluminium hydroxide or aluminium oxide, the positive electrode contains further oxidic compounds from the group of lanthanoids, $Y_2O_3$, $La_2O_3$ and $Ca(OH)_2$, as well as mixtures of these compounds.

6. Ni/metal hydride secondary element according to Claim 5, **characterized in that** the content of oxidic compounds which are added in addition to aluminium hydroxide or aluminium oxide does not exceed 9.0% by weight relative to the mass of the nickel hydroxide.

**Revendications**

1. Accumulateur au nickel-hydrure métallique avec une électrode positive à l'hydroxyde de nickel, une électrode négative, qui contient un alliage accumulateur d'hydrogène, et un électrolyte alcalin,
   **caractérisé en ce que**
   l'électrode positive pourvue d'une structure conductrice métallique tridimensionnelle contient, en plus de l'hydroxyde de nickel et de l'oxyde de cobalt, un composé de l'aluminium soluble dans l'électrolyte, au moyen duquel la surface de l'électrode positive à l'hydroxyde de nickel est modifiée par des opérations de dissolution et de précipitation.

2. Accumulateur au nickel-hydrure métallique selon la revendication 1,
   **caractérisé en ce que**
   le composé de l'aluminium est l'hydroxyde d'aluminium et/ou l'oxyde d'aluminium.

3. Accumulateur au nickel-hydrure métallique selon la revendication 1 ou 2,
   **caractérisé en ce que**
   la masse du composé de l'aluminium présent dans le mélange de masse positif vaut de 0,1 à 2 % en poids, rapportés à la masse de l'hydroxyde de nickel présent.

4. Accumulateur au nickel-hydrure métallique selon la revendication 3,
   **caractérisé en ce que**
   la teneur en hydroxyde d'aluminium ou en oxyde d'aluminium est comprise entre 0,5 et 1,0 % en poids, rapportés à la masse de l'hydroxyde de nickel.

5. Accumulateur au nickel-hydrure métallique selon l'une quelconque des revendications 1 à 4,
   **caractérisé en ce que**
   l'électrode positive contient, en combinaison avec l'hydroxyde d'aluminium ou l'oxyde d'aluminium, d'autres composés d'oxydes du groupe des lanthanides, $Y_2O_3$, $La_2O_3$ et $Ca(OH)_2$, ainsi que des mélanges de ces composés.

6. Accumulateur au nickel-hydrure métallique selon la revendication 5,
   **caractérisé en ce que**
   la teneur en composés d'oxydes mélangés en plus à l'hydroxyde d'aluminium ou à l'oxyde d'aluminium ne dépasse pas 9,0 % en poids, rapportés à la masse de l'hydroxyde de nickel.

**Figur 1**

**Figur 2**

**Figur 3**

**Figur 4**

**Figur 5**